# FASCICULE DE BREVET EUROPEEN

(11) **EP 0 638 409 B1**
(45) Date de publication et mention de la délivrance du brevet: **07.10.1998**
(21) Numéro de dépôt: 94111546.1
(22) Date de dépôt: 25.07.1994
(51) Int. Cl.: B29D 30/06, B29C 35/02, B29C 33/06, B29C 33/36

(54) **Procédé et appareil de vulcanisation de pneumatiques**
Verfahren und Vorrichtung zum Vulkanisieren von Reifen
Method and apparatus for vulcanizing tyres

(30) Priorité: 09.08.1993 FR 9309849
(43) Date de publication de la demande: 15.02.1995
(73) Titulaire: SEDEPRO, F-75015 Paris (FR)
(72) Inventeur: Dailliez, Olivier, F-69260 Charbonnières-les-Bains (FR); Laurent, Daniel, F-38240 Meylan (FR); Myatt, David, F-63119 Chateaugay (FR)
(74) Mandataire: Bauvir, Jacques

(56) Documents cités:
- EP-A- 0 246 496
- EP-A- 0 320 494
- EP-A- 0 578 104
- CH-A- 374 482
- FR-A- 2 088 002
- US-A- 1 682 620
- US-A- 3 477 100
- PATENT ABSTRACTS OF JAPAN vol. 17, no. 537 (M-1487) 28 Septembre 1993 & JP-A-05 147 046 (SANYU KOGYO KK) 15 Juin 1993 & DATABASE WPI Derwent Publications Ltd., London, GB; AN 93-223827 & JP-A-5 14 704 (SANY-N) 15 Juin 1993
- PATENT ABSTRACTS OF JAPAN vol. 8, no. 267 (M-343) (1704) 7 Décembre 1984 & JP-A-59 138 431 (TOUKAI GOMU K. K. K.)
- PATENT ABSTRACTS OF JAPAN vol. 17 , no. 537 (M-1487) 28 Septembre 1993 & DATABASE WPI Week 9328, 15 Juin 1993 Derwent Publications Ltd., London,GB; AN 93-223827

## Description

La présente invention concerne la vulcanisation des pneumatiques. Pour assurer la vulcanisation des pneumatiques, on utilise en général une presse de vulcanisation. C'est un appareil capable d'assurer la cinématique d'un moule et d'apporter les calories nécessaires pour assurer la réaction de vulcanisation. La presse de vulcanisation comporte les moyens de préhension nécessaires pour l'accrochage du moule et les mécanismes nécessaires pour ouvrir le moule et le refermer. En dehors des phases de chargement d'un pneumatique cru et de déchargement d'un pneumatique vulcanisé, les mécanismes destinés à assurer la cinématique du moule restent inutilisés.

Or, la vulcanisation est un processus relativement lent, qui requiert de maintenir le pneumatique dans le moule fermé pendant une durée variant selon les tailles de pneumatiques entre quelques minutes et plusieurs heures. Les mécanismes de la presse, inutilisés pendant toute la durée de processus de vulcanisation, peuvent représenter une partie importante du coût d'une presse. Il en résulte une mauvaise utilisation des investissements.

Afin d'améliorer la rentabilité des investissements, l'état de la technique connaît également des systèmes de vulcanisation que l'on peut qualifier de "collectifs". Une emboîteuse assure le chargement et le déchargement d'un pneumatique dans et hors d'un moule. Lorsque cette opération de chargement/déchargement est terminée, le moule quitte l'emboîteuse et reste en attente, par exemple dans un manège où il est soumis à des moyens de chauffage de la même façon que dans une presse individuelle. Un exemple d'une telle installation est décrit dans le brevet US 3 477 100. L'utilisation de tels systèmes est bien sûr d'autant plus intéressante que la durée de la vulcanisation est longue.

La présente invention vise à améliorer ces systèmes dans lesquels le moule ne reste pas attaché à une presse pendant toute la durée de la vulcanisation. En effet, si ceux-ci assurent une meilleure utilisation des mécanismes permettant d'assurer la cinématique des moules, ils posent le problème d'assurer le transfert de l'énergie calorifique pendant toute la durée de la vulcanisation. En particulier, lorsque les moules se déplacent pendant la vulcanisation, cela rend beaucoup plus complexe la liaison permettant d'amener le fluide transportant l'énergie de vulcanisation vers chaque moule. Dans tous les cas de figure, l'amélioration de la rentabilité de l'investissement n'est pas aussi importante que ce que l'on aurait pu escompter.

C'est la raison pour laquelle l'utilisation de tels systèmes de vulcanisation est restée très marginale.

Par ailleurs, il est connu de EP-A-0578 104 qui est compris dans l'état de la technique au sens de l'article 54(3) un système de vulcanisation comprenant une station de préchauffage.

La présente invention repose sur l'observation qu'il est possible de profiter de l'importante capacité calorifique des moules de pneumatique pour provoquer le transfert au moule de calories nécessaires à la vulcanisation, qu'il est possible d'effectuer un transfert de calories intense, pendant une durée très brève, et qu'il est possible de laisser les calories passer progressivement du moule vers le pneumatique.

Le procédé de vulcanisation de pneumatiques proposé par la présente invention comprend les opérations suivantes :
- introduire chaque pneumatique dans un moule jouissant d'une capacité calorifique importante, et communiquer au moule, pendant une période brève, au moins une partie de celle de l'énergie de vulcanisation devant être communiquée au pneu par l'extérieur de celui-ci, par un transfert thermique intense,
- cesser ledit transfert thermique, puis maintenir le pneu dans le moule après ladite période brève, pendant le temps nécessaire pour que se déroule la réaction de vulcanisation,
- retirer le pneumatique de son moule.

Le temps total de vulcanisation est déterminé par une loi de vulcanisation que l'homme du métier n'a aucune peine à établir, et qui s'exprime par une période de temps pendant laquelle on maintient le pneumatique à vulcaniser à un niveau de température donné, en général constant, tout en le maintenant sous pression afin d'éviter la présence de bulles gazeuses au sein du caoutchouc et afin de garantir un parfait moulage de la forme finale de fabrication. Ledit temps nécessaire est déterminé par la différence entre le temps total et ladite période brève. Au sens de la présente invention, ladite période brève est au moins inférieure à la moitié du temps total. L'application de la présente invention est d'autant plus intéressante que le temps nécessaire au delà de ladite période brève est d'autant plus important.

On sait que, pour vulcaniser un pneumatique, il est souhaitable de lui communiquer des calories à la fois par l'extérieur et par l'intérieur. Pour l'apport par l'extérieur, cela se fait en chauffant le moule, et quant à l'apport par l'intérieur, on utilise par exemple un fluide de pressurisation chauffé, en général contenu dans une membrane. De préférence, la totalité de celle de l'énergie de vulcanisation qui doit être apportée au pneumatique via le moule lui est communiquée à ladite station de chauffage.

La méthode de vulcanisation ainsi proposée conduit à transférer au moule une quantité très importante de calories pendant une durée très brève. Afin de ne pas dépasser la température de consigne souhaitée pour la vulcanisation du pneumatique, on apporte les calories de préférence du côté du moule opposé aux surfaces moulantes. Pendant le transfert d'énergie, certaines parties du moule, notamment celles auxquelles on a communiqué l'énergie de vulcanisation, peuvent se trouver réchauffées à une température très supérieure à la température de consigne. On a observé qu'il est possible d'obtenir un fonctionnement de l'installation tel que les calories communiquées au moule passent progressivement au pneumatique, qui se trouve réchauffé d'une façon tout à fait homogène et régulière, tous les points du pneumatique atteignant une température qui reste à l'intérieur de tolérances étroites autour de la température de consigne.

Dans une variante préférée d'application du procédé selon l'invention, dès la fin du transfert thermique pour un pneumatique donné, on déplace le moule le contenant pour le déposer dans un espace d'attente pendant le temps nécessaire pour que se déroule la réaction de vulcanisation, et, avant que la réaction de vulcanisation ne soit terminée pour ledit pneumatique donné, on enchaîne le transfert thermique et les autres opérations indiquées pour un autre pneumatique.

Sous un autre aspect, l'invention propose un appareil de vulcanisation de pneus introduits dans un moule, comportant une station de chauffage centralisée, comportant des moyens pouvant être couplés au moule lorsque celui-ci séjourne dans ladite station de chauffage pendant le temps nécessaire pour lui transférer de l'énergie calorifique devant être restituée au pneu, et des moyens permettant de déplacer le moule, découplé desdits moyens de transfert d'énergie, vers une chambre d'attente annexe pouvant accueillir plusieurs pneus et leurs moules pour y compléter la réaction de vulcanisation au moins en partie sous l'effet de la chaleur emmagasinée par le moule à ladite station de chauffage.

Ainsi, l'appareil de vulcanisation de pneus introduits dans un moule comporte une station de chauffage centralisée, comportant des moyens pouvant être couplés au mouie lorsque celui-ci séjourne dans ladite station de chauffage pendant le temps nécessaire pour lui transférer de l'énergie calorifique devant être restituée au pneu, et comporte des moyens permettant de déplacer le moule, découplé desdits moyens de transfert d'énergie, vers une chambre d'attente annexe, pour y compléter la réaction de vulcanisation au moins en partie sous l'effet de la chaleur emmagasinée par le moule à ladite station de chauffage.

Pour assurer le transfert de l'énergie de vulcanisation, différentes réalisations sont possibles. La description ci-dessous présente un appareil qui utilise l'induction magnétique pour réchauffer un moule. Dans ce cas, il faut utiliser un moule dont une partie suffisante soit en matière métallique magnétique, afin de pouvoir produire dans le moule des courants de Foucault.

On pourrait envisager bien d'autres techniques de chauffage du moule, comme par exemple un chauffage par contact, ou un chauffage par rayonnement infrarouge. Il va de soi que l'invention n'est nullement limitée à cet exemple qui n'est donné que pour faire comprendre le principe de l'invention.

Afin de réaliser une machine aussi compacte que possible, l'introduction dans un moule et la communication d'énergie se font au même endroit. Dans ce cas, l'équipement permettant de communiquer au moule l'énergie de vulcanisation se trouve intégré à l'emboîteuse qui assure la cinématique nécessaire pour que le moule puisse s'ouvrir et se refermer autour du pneumatique. L'énergie de vulcanisation est ainsi communiquée au moule pendant son séjour à l'emboîteuse. Il est même possible de faire débuter le transfert d'énergie vers le moule avant la fermeture complète du moule.

Grâce à cette invention, il est possible d'augmenter le nombre de fonctions assurées par l'installation centrale et de simplifier considérablement le reste de l'installation de vulcanisation qui ne sert pas à transmettre des calories au pneu via le moule qui l'entoure extérieurement.

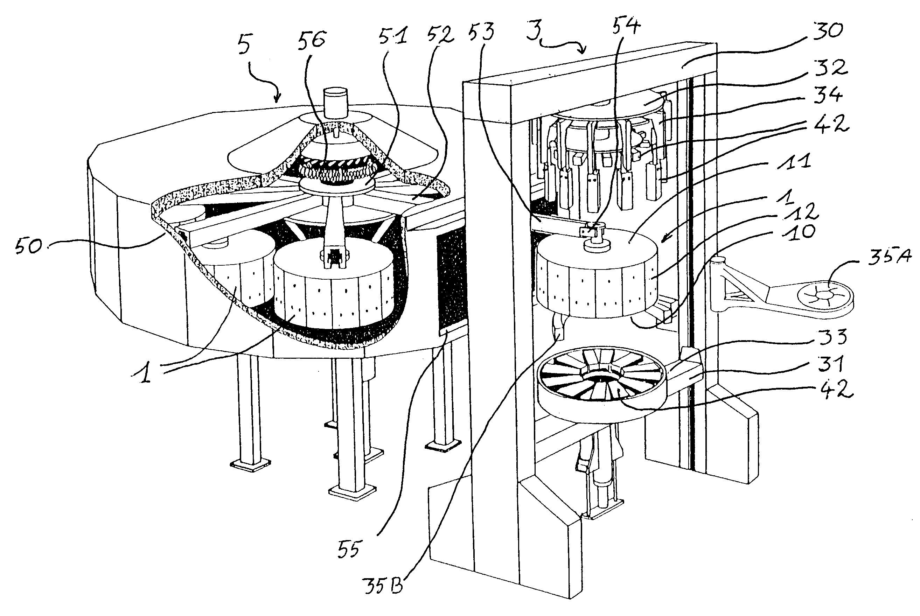

A la figure jointe, on voit une perspective qui montre un appareil de vulcanisation selon l'invention.

On voit une chambre 5 capable d'accueillir huit moules 1 contenant les pneumatiques pendant le temps nécessaire à la vulcanisation. On peut reconnaître une coquille inférieure 10, une coquille supérieure 11 et une couronne de secteurs 12. Il peut s'agir de pièces métalliques supplémentaires directement reliées auxdites coquilles et auxdits secteurs, réalisés par ailleurs par une méthode quelconque, non concernée par la présente invention. Les moules 1 sont supportés par un carrousel 51 rotatif susceptible d'accueillir les moules à différentes places disposées en cercle tout autour du carrousel. Pour supporter les moules, le carrousel comporte des poutres 52 rayonnantes ; chacune des poutres 52 contient une coulisse 53 équipée à son extrémité d'une pince 54 permettant de saisir un moule 1.

La paroi 50 de la chambre 5 est revêtue d'un isolant permettant de limiter les déperditions calorifiques. Une résistance 56 incorporée à la chambre 5 permet de maintenir la température régnant à l'intérieur de celle-ci à un niveau constant malgré les déperditions calorifiques au travers des parois de la chambre et malgré les déperditions calorifiques provoquées par l'ouverture de la porte 55 le temps nécessaire pour extraire et/ou introduire un moule 1 à l'intérieur de celle-ci. Même si occasionnellement, un moule est introduit dans la chambre 5 à (ou évolue vers) une température inférieure à la température régnant dans ladite chambre, il en résultera un état thermique qui ne peut pas être considéré comme un apport d'énergie sélectivement à un moule donné. Il n'y a d'ailleurs aucune régulation liant la commande de cette résistance 56 à la température ou à un quelconque paramètre relevé sur un moule pendant son séjour dans la chambre 5.

La référence 3 désigne le dispositif permettant d'assurer la cinématique du moule, que l'on appelle l'emboîteuse. Celle-ci comporte une poutre supérieure 30 à laquelle est suspendu un plateau supérieur 32, et une poutre inférieure 31 portant un plateau inférieur 33. La poutre inférieure 31 est mobile par rapport à la poutre supérieure 30. Les deux poutres 30 et 31 restent toujours parallèles entre elles.

Chaque moule 1 dispose de son propre équipement interne, solidaire de la coquille inférieure, comprenant une membrane de mise en pression au moyen d'un fluide, par exemple de l'azote. Le plateau inférieur 33 contient les moyens de commande de cet équipement interne, permettant de déployer la membrane à l'intérieur du pneumatique et de la rétracter hors de celui-ci.

Des bras latéraux 34 sont disposés en cercle tout autour du plateau supérieur 32. Ils s'étendent perpendiculairement à celui-ci et peuvent être éloignés ou rapprochés radialement. Le mouvement des bras latéraux 34 permet d'assurer le recul ou le rapprochement des secteurs du moule. Il y a donc autant de bras latéraux 34 que de secteurs sur le moule. Chacun des plateaux 32, 33 contient un mécanisme (non représenté) lui permettant de s'accrocher à l'une des coquilles latérales du moule. L'extrémité des bras latéraux 34 peut être vertouillée et dévertouillée au dos de chacun des secteurs du moule, du côté opposé aux surfaces moulantes. Les plateaux 32 et 33 et chacun des bras latéraux 34 sont équipés d'inducteurs 42 qui permettent d'assurer le transfert d'énergie calorifique au moule par couplage inductif.

La figure jointe représente l'appareil de vulcanisation à un moment de son cycle de fonctionnement qui correspond soit à l'introduction d'un moule équipé d'un pneumatique à l'intérieur de la chambre 5, soit à l' extraction d'un moule de cette même chambre 5 en fin de vulcanisation. Dans les deux situations, le moule est fermé et contient un pneumatique.

Le fonctionnement de l'appareil est le suivant. On suppose qu'un moule 1 vient d'être extrait de la chambre 5. La poutre inférieure 31 se relève jusqu'à ce que le plateau inférieur 33 accoste le moule 1, et se verrouille sur la coquille inférieure 10. La pince 54 relâche le moule 1 et la coulisse 53 se rétracte à l'intérieur de la chambre 5. La poutre inférieure 31 continue à se relever jusqu'à ce que le moule 1 accoste le plateau supérieur 32. Celui-ci se verrouille sur la coquille supérieure 11. Ensuite, tous les bras latéraux 34 se rapprochent du moule 1 et se verrouillent sur les secteurs 12 correspondants.

Notons que l'on peut utiliser un moule auto-bloquant du type de celui décrit dans le brevet US 4 895 692. Celui-ci impose une cinématique d'ouverture et de fermeture particulière. Le lecteur se reportera au brevet cité pour en connaître tous les détails.

A ce stade, le moule 1 est totalement solidaire de l'emboîteuse 3. Celle-ci va pouvoir ouvrir le moule 1 pour extraire le pneumatique vulcanisé, après que l'on ait fait chuter la pression régnant dans la cavité interne du pneumatique (retrait de la membrane). Les bras latéraux 34 reculent en emportant chacun un secteur. La poutre mobile 31 peut descendre jusqu'à un niveau qui permet à une potence 35B d'évacuer le pneumatique vulcanisé. Ensuite, une potence 35A peut introduire un pneumatique cru sur le plateau inférieur 33 et le cycle recommence, à savoir : fermeture du moule et déploiement de la membrane à l'intérieur du pneu, chauffage du moule, reprise de celui-ci par une coulisse 53, introduction du moule dans la chambre 5. L'emboîteuse se trouve alors disponible pour traiter le prochain pneumatique arrivant en fin de séjour dans la chambre 5. Le temps de séjour de chaque moule dans la chambre 5 dépend du temps nécessaire pour que se développe la réaction de vulcanisation.

On peut communiquer l'énergie calorifique au moule non seulement lorsqu'il contient le pneu à vulcaniser, mais également par anticipation dès que les secteurs et les coquilles sont manipulés par l'emboîteuse, ce qui diminue le temps de séjour à l'emboîteuse du pneumatique dont on va débuter la vulcanisation. La quantité d'énergie reçue par le moule est contrôlée par une régulation basée sur la mesure de la température en un point déterminé du moule et sur la connaissance expérimentale du comportement thermique du moule utilisé. C'est un chauffage par accumulation. La très forte inertie thermique du moule fait que ce système de vulcanisation est particulièrement stable et tolérant.

Signalons encore qu'il est même possible d'introduire dans la chambre 5 des pneumatiques de dimensions différentes, dont les lois de vulcanisation sont différentes. Dans ce cas, on peut choisir une cuisson à durée constante, la même pour tous les moules qui y sont introduits successivement. Il est nécessaire alors d'ajuster la température de la cuisson, ce qui se fait en ajustant la température à laquelle le moule est réchauffé par les inducteurs.

Il a été expliqué plus haut que, pendant ladite période brève correspondant au transfert d'énergie vers le moule, la température d'un moule n'est pas homogène. Bien entendu, l' ajustement de température dont on parle ci-dessus est une notion différente de la non homogénéité de température caractéristique de la phase de transfert thermique intense. Lorsque l'on parle ici d' ajuster la température du moule à un niveau différent, on veut désigner une température relevée à un endroit donné sur chaque moule, par exemple par une sonde placée à la surface extérieure du moule (par exemple au dos d'un secteur, du côté opposé à la surface moulante).

On peut aussi choisir de réchauffer tous les moules toujours à la même température. Il est alors nécessaire d'ajuster la durée de vulcanisation, ce qui se fait en retirant les moules 1 hors de la chambre 5 dans l'ordre adéquat, et non pas simplement dans l'ordre dans lequel ils y ont été introduits.

Il est bien sûr possible d'utiliser une combinaison des deux méthodes précédentes, à savoir adopter une température différente pour chaque type de moule, et en même temps ajuster le temps de séjour à l'intérieur de la chambre 5 différemment pour chaque type de moule.

Il peut être souhaitable de continuer à apporter des calories par l'intérieur du pneumatique pendant que le moule se trouve dans la chambre 5. Différentes solutions peuvent être adoptées. Par exemple, on peut utiliser un fluide caloporteur, et l'équipement interne peut comprendre un système de chauffage et de brassage d'une charge de ce fluide. Dans ce cas, on peut utiliser un équipement de centre moule du type à membrane tel que décrit par exemple dans le brevet US 4 728 274, avec des moyens de connexion électrique appropriés reliés à chaque moule pendant son séjour dans la chambre 5.

## Revendications

1. Appareil de vulcanisation de pneus introduits dans un moule (1), comportant une station de chauffage centralisée, comportant des moyens pouvant être couplés au moule lorsque celui-ci séjourne dans ladite station de chauffage pendant le temps nécessaire pour lui transférer de l'énergie calorifique devant être restituée au pneu, et des moyens permettant de déplacer le moule, découplé desdits moyens de transfert d'énergie, vers une chambre (5) d'attente annexe pouvant accueillir plusieurs pneus et leurs moules pour y compléter la réaction de vulcanisation au moins en partie sous l'effet de la chaleur emmagasinée par le moule à ladite station de chauffage.

2. Appareil selon la revendication 1, caractérisé en ce qu'il comporte une emboîteuse (3) permettant d'introduire ou de retirer le pneu dudit moule (1).

3. Appareil selon l'une des revendications 1 ou 2, utilisant un moule au moins en partie réalisé en matière métallique magnétique, dans lequel ladite station comporte des inducteurs électriques (42) produisant des courants de Foucault dans le moule (1) pour assurer le transfert d'énergie calorifique.

4. Appareil selon la revendication 3, caractérisé en ce que, pendant le transfert d'énergie, les inducteurs (42) sont disposés au dos du moule (1), du côté opposé aux surfaces moulantes.

5. Appareil selon l'une des revendications 2 à 4, caractérisé en ce que les moyens pouvant être couplés au moule comportent des bras (34) pouvant être verrouillés et déverrouillés sur moule, lesdits bras étant équipés d'inducteurs (42) qui permettent d'assurer le transfert d'énergie calorifique au moule par couplage inductif.

6. Appareil selon l'une des revendications 2 à 5, caractérisé en ce que ladite station est incorporée à l'emboîteuse (3).

7. Appareil selon la revendication 1 ou 2, caractérisé en ce que ladite chambre (5) comporte un carrousel (51) rotatif susceptible d'accueillir les moules (1) à différentes places disposées en cercle tout autour du carrousel (51).

8. Procédé de vulcanisation de pneumatiques comprenant les opérations suivantes :
- introduire chaque pneumatique dans un moule jouissant d'une capacité calorifique importante, et communiquer au moule, pendant une période brève, au moins une partie de celle de l'énergie de vulcanisation devant être communiquée au pneu par l'extérieur de celui-ci, par un transfert thermique intense,
- cesser ledit transfert thermique, puis maintenir le pneu dans le moule après ladite période brève, pendant le temps nécessaire pour que se déroule la réaction de vulcanisation,
- retirer le pneumatique de son moule.

9. Procédé selon la revendication 8, dans lequel, dès la fin du transfert thermique pour un pneumatique donné, on déplace le moule le contenant pour le déposer dans un espace d'attente pendant le temps nécessaire pour que se déroule la réaction de vulcanisation, et, avant que la réaction de vulcanisation ne soit terminée pour ledit pneumatique donné, on enchaîne le transfert thermique et les autres opérations indiquées pour un autre pneumatique.

10. Procédé selon la revendication 9, utilisé pour traiter au cours des séquences successives des pneumatiques de dimensions différentes, dans lequel le temps de séjour audit espace d'attente est identique pour tous les pneumatiques, la température de vulcanisation étant ajustée en fonction de la dimension de chaque pneumatique.

11. Procédé selon la revendication 9, utilisé pour traiter au cours des séquences successives des pneumatiques de dimensions différentes, dans lequel le temps de séjour audit espace d'attente est ajusté en fonction de la dimension de chaque pneumatique, la température de vulcanisation étant identique pour tous les pneumatiques.

12. Procédé selon l'une des revendications 8 à 11, dans lequel le transfert d'énergie débute avant la fermeture complète du moule.

## Claims

1. A vulcanisation apparatus for tyres introduced into a mould (1), comprising a centralised heating station having means which can be coupled to the mould when the latter remains in said heating station for the time necessary to transfer thereto the heat energy to be returned to the tyre, and means for moving the mould, uncoupled from said energy transfer means, towards an annexed waiting chamber (5) capable of receiving a plurality of tyres and their moulds in order to complete the vulcanisation reaction therein at least in part under the effect of the heat stored by the mould at said heating station.

2. An apparatus according to Claim 1, characterised in that it comprises an encaser (3) making it possible to introduce or withdraw the tyre from said mould (1).

3. An apparatus according to one of Claims 1 or 2, utilising a mould made, at least in part, of magnetic metal material and in which said station comprises electric inductors (42) producing eddy currents in the mould (1) in order to ensure the transfer of heat energy.

4. An apparatus according to Claim 3, characterised in that, during the transfer of energy, the inductors (42) are arranged on the back of the mould (1) on the side opposite the moulding surfaces.

5. An apparatus according to one of Claims 2 to 4, characterised in that the means which can be coupled to the mould comprise arms (34) which can be locked and unlocked on the mould, said arms being equipped with inductors (42) which make it possible to transfer heat energy to the mould by inductive coupling.

6. An apparatus according to one of Claims 2 to 5, characterised in that said station is incorporated in the encaser (3).

7. An apparatus according to Claim 1 or 2, characterised in that said chamber (5) comprises a rotary carousel (51) capable of receiving the moulds (1) at different places arranged in a circle around the carousel (51).

8. A method of vulcanising tyres comprising the following operations:
- introducing each tyre into a mould of substantial heat capacity and imparting to the mould, for a short period of time, at least a part of that of the vulcanisation energy which is to be imparted to the tyre from the outside thereof by an intense heat transfer,
- terminating said heat transfer and then maintaining the tyre in the mould after said short period of time, for the time necessary in order for the vulcanisation reaction to take place,
- removing the tyre from its mould.

9. A method according to Claim 8, wherein, upon the end of the heat transfer for a given tyre, the mould containing it is displaced in order to place it in a waiting space during the time necessary for the vulcanisation reaction to take place, and, before the vulcanisation reaction is terminated for said given tyre, the heat transfer and other operations indicated for another tyre are started.

10. A method according to Claim 9, used to treat during the successive sequences tyres of different dimensions, in which the time of stay in said waiting space is identical for all the tyres, the vulcanisation temperature being adjusted as a function of the size of each tyre.

11. A method according to Claim 9, used to treat during successive sequences tyres of different dimensions, in which the time of stay in said waiting space is adjusted as a function of the size of each tyre, the vulcanisation temperature being identical for all the tyres.

12. A method according to one of Claims 8 to 11, in which the transfer of energy commences before the complete closing of the mould.

## Patentansprüche

1. Vorrichtung zur Vulkanisation von Reifen, die in eine Form (1) eingeführt sind, mit einer zentralen Aufheizstation, die Mittel aufweist, die mit der Form, wenn sich diese in der genannten Beheizungsstation aufhält, während der Zeit gekoppelt werden können, die notwendig ist, um auf sie Wärmeenergie zu übertragen, bevor sie auf den Reifen weitergegeben wird, sowie mit Mitteln, die es gestatten, die Form, die von den genannten Energieübertragungsmitteln entkoppelt ist, zu einer angefügten Wartekammer (5) zu überführen, die mehrere Reifen und ihre Formen aufnehmen kann, um dort die Vulkanisationsreaktion mindestens teilweise unter Wirkung der Wärme fertigzustellen, die durch die Form in der genannten Beheizungsstation eingespeichert wurde.

2. Vorrichtung nach Anspruch 1, dadurch gekennzeichnet, daß sie eine Zusammenführeinrichtung (3) aufweist, die es gestattet, den Reifen in die genannte Form (1) einzubringen oder aus dieser zu entnehmen.

3. Vorrichtung nach einem der Ansprüche 1 oder 2, die eine Form benutzt, die mindestens teilweise aus metallischem, magnetischem Material hergestellt ist, worin die genannte Station elektrische Induktionseinrichtungen (42) aufweist, die in der Form (1) Wirbelströme erzeugen, um die Übertragung von Wärmeenergie sicherzustellen.

4. Vorrichtung nach Anspruch 3, dadurch gekennzeichnet, daß die Induktionseinrichtungen (42) während der Energieübertragung am Rücken der Form (1) auf der Seite angeordnet sind, die den abformenden Oberflächen entgegengesetzt ist.

5. Vorrichtung nach einem der Ansprüche 2 bis 4, dadurch gekennzeichnet, daß die Mittel, die an die Form angekoppelt werden können, Arme (34) aufweisen, die auf der Form ver- und entriegelt werden können, und daß die genannten Arme mit Induktionseinrichtungen (42) ausgestattet sind, die es gestatten, die Wärmeenergieübertragung auf die Form durch induktive Koppelung sicherzustellen.

6. Vorrichtung nach einem der Ansprüche 2 bis 5, dadurch gekennzeichnet, daß die genannte Station in die Zusammenführeinrichtung (3) mitaufgenommen ist.

7. Vorrichtung nach Anspruch 1 oder 2, dadurch gekennzeichnet, daß die genannte Kammer (5) ein drehbares Karussell (51) aufweist, das imstande ist, die Formen (1) an unterschiedlichen Stellen aufzunehmen, die im Kreis rund um das Karussell (51) angeordnet sind.

8. Verfahren zur Vulkanisation von Reifen mit den folgenden Vorgängen:
- jeder Reifen wird in eine Form eingebracht, die eine beträchtliche Wärmekapazität aufweist, und mit der Form wird während eines kurzen Zeitraums mindestens ein Teil dieser als Vulkanisationsenergie mitgeteilt, bevor sie dem Reifen durch dessen Außenseite mitgeteilt wird, und zwar durch intensive Wärmeübertragung,
- man stellt die genannte Wärmeübertragung ein und hält dann den Reifen während der Zeit, die notwendig ist, daß die Vulkanisationsreaktion abgewickelt wird, nach dem genannten kurzen Zeitraum in der Form, und
- der Reifen wird aus seiner Form entnommen.

9. Verfahren nach Anspruch 8, worin man schon am Ende der Wärmeübertragung für einen vorgegebenen Reifen die Form, die ihn enthält, versetzt, um sie in einem Warteraum während der Zeit anzuordnen, die notwendig ist, damit die Vulkanisationsreaktion abgewickelt wird, und daR man, bevor noch die Vulkanisationsreaktion für den genannten gegebenen Reifen beendet ist, mit der Wärmeübertragung und den anderen Vorgängen fortfährt, die für einen anderen Reifen angezeigt sind.

10. Verfahren nach Anspruch 9, das verwendet wird, um im Verlauf von sukzessiven Folgen Reifen mit unterschiedlichen Abmessungen zu behandeln, worin die Verweilzeit im genannten Warteraum für alle Reifen identisch ist und die Vulkanisationstemperatur in Funktion der Abmessung eines jeden Reifens eingestellt wird.

11. Verfahren nach Anspruch 9, das verwendet wird, um im Verlauf sukzessiver Folgen Reifen mit unterschiedlichen Abmessungen zu behandeln, worin die Verweilzeit im genannten Warteraum in Funktion der Abmessung eines jeden Reifens eingestellt wird und die Vulkanisationstemperatur für alle Reifen identisch ist.

12. Verfahren nach einem der Ansprüche 8 bis 11, worin die Energieübertragung schon vor dem vollständigen Schließen der Form beginnt.
